# EUROPEAN PATENT APPLICATION

(11) **EP 4 266 807 A1**
(43) Date of publication of application: **25.10.2023**
(21) Application number: 21905776.7
(22) Date of filing: 16.12.2021
(51) Int. Cl.: H04W 74/00, H04W 74/08

(54) **PDCCH MONITORING METHOD, TERMINAL, AND NETWORK-SIDE DEVICE**

(30) Priority: 18.12.2020 CN 202011511564
(71) Applicant: Vivo Mobile Communication Co., Ltd., Dongguan, Guangdong 523863 (CN)
(72) Inventor: YOU, Huazheng, Dongguan, Guangdong 523863 (CN); LI, Dongru, Dongguan, Guangdong 523863 (CN); SHEN, Xiaodong, Dongguan, Guangdong 523863 (CN)
(74) Representative: Murgitroyd & Company
(86) International application number: PCT/CN2021/138727
(87) International publication number: WO 2022/127850

(57) **Abstract**

Embodiments of this application disclose a PDCCH monitoring method, a terminal, and a network side device. The method may be applied to a terminal and includes: receiving first DCI, where the first DCI is used to indicate PDCCH skipping monitoring; and determining a first behavior according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

## Description

### CROSS-REFERENCE TO RELATED APPLICATION

This application claims priority to Chinese Patent Application No. 202011511564.3 filed in China on December 18, 2020 and entitled "PDCCH MONITORING METHOD, TERMINAL, AND NETWORK SIDE DEVICE", which is incorporated herein by reference in its entirety.

### TECHNICAL FIELD

This application belongs to the field of communication technologies, and in particular, relates to a physical downlink control channel (Physical Downlink Control Channel, PDCCH) monitoring method, a terminal, and a network side device.

### BACKGROUND

PDCCH skipping (PDCCH skipping) monitoring refers to a terminal skipping PDCCH monitoring for a time interval, for example, a terminal skips PDCCH monitoring with 8 or 16 time slots (slot), and the terminal may enter a sleep state in a PDCCH skipping monitoring interval to save power.

A bandwidth part (Bandwidth Part, BWP) is a subset of a total bandwidth of a cell. Each BWP may use different bandwidths and parameter sets, and sizes of receiving and transmitting bandwidths of the terminal can be flexibly adjusted by switching different BWPs, thereby increasing scheduling flexibility, saving terminal power, and meeting a service diversity requirement of New Radio (New Radio, NR).

In a related art, if a conflict occurs between PDCCH skipping monitoring and BWP switching, a behavior of the terminal is not determined yet, and a transmission problem is easily caused due to inconsistent understanding between the terminal and a network side device.

### SUMMARY

Embodiments of this application provide a PDCCH monitoring method, a terminal, and a network side device, which can solve a transmission problem easily caused by inconsistent understanding between the terminal and the network side device in a case that a conflict occurs between PDCCH skipping monitoring and BWP switching.

According to a first aspect, a PDCCH monitoring method applied to a terminal is provided, including: receiving first downlink control information DCI, where the first DCI is used to indicate physical downlink control channel PDCCH skipping monitoring; and determining a first behavior according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

According to a second aspect, a PDCCH monitoring method applied to a network side device is provided, including: sending first DCI, where the first DCI is used to indicate PDCCH skipping monitoring; and determining a first behavior of a terminal according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

According to a third aspect, a PDCCH monitoring apparatus is provided, including: a receiving module, configured to receive first DCI, where the first DCI is used to indicate PDCCH skipping monitoring; and a determining module, configured to determine a first behavior according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

According to a fourth aspect, a PDCCH monitoring apparatus is provided, including: a sending module, configured to send first DCI, where the first DCI is used to indicate PDCCH skipping monitoring; and a determining module, configured to determine a first behavior of a terminal according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

According to a fifth aspect, a terminal is provided, where the terminal includes a processor, a memory, and a program or instructions stored in the memory and executable on the processor, where when the program or instructions are executed by the processor, the method in the first aspect is implemented.

According to a sixth aspect, a network side device is provided, where the network side device includes a processor, a memory, and a program or instructions stored in the memory and executable on the processor, where when the program or instructions are executed by the processor, the method in the third aspect is implemented.

According to a seventh aspect, a readable storage medium is provided, where a program or instructions are stored in the readable storage medium, and when the program or the instructions are executed by a processor, the method according to the first aspect or the method according to the second aspect is implemented.

According to an eighth aspect, provided is a computer program product including a processor, a memory, and a program or instructions stored in the memory and executable on the processor, where when the program or the instructions are executed by the processor, the method according to the first aspect is implemented, or the method according to the second aspect is implemented.

According to a ninth aspect, a chip is provided, where the chip includes a processor and a communication interface, the communication interface is coupled to the processor, and the processor is configured to execute a program or instructions to implement the method according to the first aspect or implement the method according to the second aspect.

In the embodiments of this application, in a case that the terminal receives the first DCI used to indicate the PDCCH skipping monitoring, the terminal may determine the first behavior according to the first DCI. The first behavior includes at least one of the following: a state of a BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching. According to the first behavior of the terminal in the embodiments of this application, the transmission problem easily caused by inconsistent understanding between the terminal and the network side device in a case of a conflict between the PDCCH skipping monitoring and the BWP switching can be solved, and communication effectiveness can be improved.

### BRIEF DESCRIPTION OF THE DRAWINGS

FIG. 1 is a schematic diagram of a wireless communication system according to an embodiment of this application;
FIG. 2 is a schematic flowchart of a PDCCH monitoring method according to an embodiment of this application;
FIG. 3 is a schematic diagram of a PDCCH monitoring method according to an embodiment of this application;
FIG. 4 is a schematic diagram of a PDCCH monitoring method according to an embodiment of this application;
FIG. 5 is a schematic diagram of a PDCCH monitoring method according to an embodiment of this application;
FIG. 6 is a schematic diagram of a PDCCH monitoring method according to an embodiment of this application;
FIG. 7 is a schematic diagram of a PDCCH monitoring method according to an embodiment of this application;
FIG. 8 is a schematic flowchart of a PDCCH monitoring method according to an embodiment of this application;
FIG. 9 is a schematic structural diagram of a PDCCH monitoring apparatus according to an embodiment of this application;
FIG. 10 is a schematic structural diagram of a PDCCH monitoring apparatus according to an embodiment of this application;
FIG. 11 is a schematic structural diagram of a communication device according to an embodiment of this application;
FIG. 12 is a schematic structural diagram of a terminal according to an embodiment of this application; and
FIG. 13 is a schematic structural diagram of a network side device according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first" and "second" are used to distinguish between similar objects, but are unnecessarily used to describe a specific sequence or order. It should be understood that data terms in such a way is exchangeable in a proper case, so that the embodiments of this application described herein can be implemented in an order other than the order shown or described herein. In addition, objects distinguished by "first", "second", and the like are generally of one type, and a quantity of objects is not limited. For example, there may be one or more first objects. In addition, "and/or" in this specification and the claims represents at least one of the connected objects, and the character "/" generally represents an "or" relationship between the associated objects.

It should be noted that technologies described in embodiments of this application are not limited to a Long Term Evolution (Long Term Evolution, LTE)/LTE-Advanced (LTE-Advanced, LTE-A) system, and may be further applied to another wireless communication system such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-LTE-A), and another system. The terms "system" and "network" in the embodiments of this application are often used interchangeably. The described technology may be used in the foregoing system and radio technology, or may be used in another system and radio technology. The following description describes a New Radio (New Radio, NR) system for example, and the NR term is used in most of the following descriptions. However, these technologies may also be applied to applications other than NR system applications, such as a 6th Generation (6^{th} Generation, 6G) communications system.

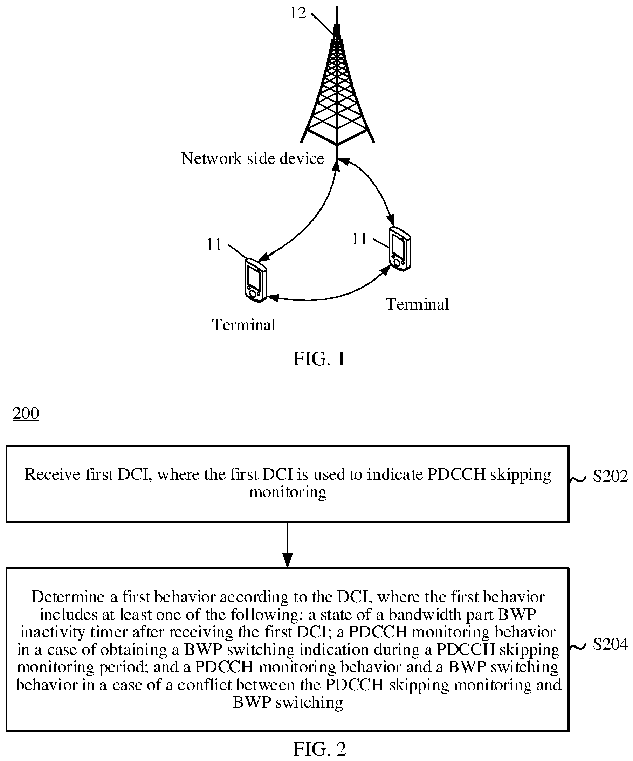

FIG. 1 is a schematic diagram of a wireless communication system applicable to an embodiment of this application. The wireless communication system includes a terminal 11 and a network side device 12. The terminal 11 may also be referred to as a terminal device or a user equipment (User Equipment, UE). The terminal 11 may be a terminal device such as a mobile phone, a tablet computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), or a vehicle user equipment (VUE), or a pedestrian user equipment (PUE). The wearable device includes: a band, a headset, glasses, and the like. It should be noted that, this embodiment of this application does not limit a particular type of the terminal 11. The network side device 12 may be a base station or a core network. The base station may be referred to as a Node B, an evolved Node B, an access point, a base transceiver station (Base Transceiver Station, BTS), a radio base station, a radio transceiver, a basic service set (Basic Service Set, BSS), an extended service set (Extended Service Set, ESS), a Node B, an evolved Node B (eNB), a next generation Node B (gNB), a home Node B, a home evolved Node B, a WLAN access point, a Wi-Fi node, a transmitting receiving point (Transmitting Receiving Point, TRP), or another suitable term in the field. Provided that a same technical effect is achieved, the base station is not limited to a specific technical term. It needs to be noted that, in this application, only a base station in an NR system is used as an example, but a specific type of the base station is not limited.

The physical downlink control channel (Physical Downlink Control Channel, PDCCH) monitoring method, the terminal, and the network side device provided in the embodiments of this application are described in detail below by using specific embodiments and application scenarios thereof with reference to the accompanying drawings.

As shown in FIG. 2, an embodiment of this application provides a PDCCH monitoring method 200, which may be performed by a terminal. In other words, the method may be performed by software or hardware installed on the terminal, and the method includes the following steps.

S202: Receive first downlink control information (Downlink Control Information, DCI), where the first DCI is used to indicate PDCCH skipping monitoring.

In this step, the terminal may receive a PDCCH, and the PDCCH carries the first DCI. The first DCI is used to indicate the terminal to perform PDCCH skipping monitoring. For example, the first DCI includes first indication information indicating the terminal to enter PDCCH skipping monitoring period (PDCCH skipping duration) after a DCI receiving moment.

S204: Determine a first behavior according to the first DCI, where the first behavior includes at least one of the following: (1) a state of a bandwidth part (Bandwidth Part, BWP) inactivity timer (Bwp-Inactivity Timer) after receiving the first DCI; (2) a PDCCH monitoring behavior in a case of obtaining a BWP switching indication during a PDCCH skipping monitoring period; and (3) a PDCCH monitoring behavior and a BWP switching behavior in a case of a conflict between the PDCCH skipping monitoring and BWP switching.

It may be understood that if there is no conflict during implementation of the three first behaviors listed above, the terminal may perform one or more of the three first behaviors.

The determining the first behavior according to the first DCI mentioned in this step includes, for example: determining the first behavior according to a protocol agreement and the first DCI; or determining the first behavior according to a radio resource control (Radio Resource Control, RRC) configuration and the first DCI; or determining the first behavior and the like directly according to a DCI indication.

The determining the first behavior by the terminal mentioned in this step may be understood as determining by the terminal how to perform (i.e., how to perform the first behavior); or may be understood as directly performing or executing the first behavior by the terminal.

According to the PDCCH monitoring method provided in this embodiment of this application, in a case that the terminal receives the first DCI indicating PDCCH skipping monitoring, the first behavior may be determined according to the first DCI, and the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching. According to the first behavior of the terminal in the embodiments of this application, the transmission problem easily caused by inconsistent understanding between the terminal and the network side device in a case of a conflict between the PDCCH skipping monitoring and the BWP switching can be solved, and communication effectiveness can be improved.

In Embodiment 200, the terminal determines the first behavior according to the first DCI, and the first behavior executed by the terminal will be described in detail in a plurality of solutions.

### Solution 1

In this solution, that the terminal receives the state of the BWP inactivity timer after receiving the first DCI includes: suspending or stopping the BWP inactivity timer after receiving the first DCI.

With regard to the function of the above-mentioned BWP inactivity timer, generally, if the terminal does not receive uplink and downlink scheduling DCI during the operation of the BWP inactivity timer, the terminal will switch from a current BWP to a default (default) BWP in a case that the BWP inactivity timer expires.

For example, the terminal (such as UE) operates at the current BWP, performs PDCCH skipping monitoring (PDCCH skipping) according to an indication of the first DCI, and suspends or stops the BWP inactivity timer at one of the following moments:
1) a moment at which the first DCI is received;
2) a target moment after receiving the first DCI, where the target moment is before a start moment of the PDCCH skipping monitoring period. It may be understood that in a sequence from front to back in a time sequence: The terminal first receives DCI; then performs PDCCH skipping monitoring according to an indication of the DCI; and finally, according to a PDCCH skipping monitoring indication, enters a PDCCH skipping monitoring period (PDCCH skipping duration). The target moment may be specifically a moment at which an application delay indicated by PDCCH skipping arrives, or a moment at which an effective delay indicated by PDCCH skipping arrives; and
3) the start moment of the PDCCH skipping monitoring period.

Optionally, in a case of suspending the BWP inactivity timer in this embodiment, the method further includes the following step: performing the PDCCH skipping monitoring according to the first DCI, and resuming the BWP inactivity timer in a case that the PDCCH skipping monitoring period ends.

Solution 1 avoids a transmission problem caused by inconsistent understanding between the network side device and the terminal due to expiration of the BWP inactivity timer during the PDCCH skipping monitoring period, and improves communication effectiveness.

### Solution 2

Solution 2 mainly describes impact of BWP switching (or a BWP switching indication) on PDCCH skipping monitoring. Solution 2.1 and Solution 2.2 are described below.

### Solution 2.1

In this solution, the PDCCH monitoring behavior in a case of obtaining a BWP switching indication during a PDCCH skipping monitoring period includes: if the BWP switching indication is obtained in the PDCCH skipping monitoring period, stopping the PDCCH skipping monitoring in a BWP before switching, and no longer performing the PDCCH skipping monitoring in a target BWP after switching.

Specifically, the UE operates at the current BWP and performs PDCCH skipping according to the first DCI indication. If the BWP switching indication is obtained within the PDCCH skipping duration, the UE may perform BWP switching according to the BWP switching indication, stop the PDCCH skipping process, and does not continue to perform PDCCH skipping on the target BWP after switching. That is, the PDCCH skipping indication is effective only on the currently activated BWP and ineffective on the target BWP after switching.

The BWP switching indication in this embodiment may be transmitted by the network side device and received by the terminal. The BWP switching indication in this embodiment may also be obtained because the BWP inactivity timer expires.

### Solution 2.2

In this solution, the PDCCH monitoring behavior in a case of obtaining a BWP switching indication during a PDCCH skipping monitoring period includes: if the BWP switching indication is obtained in the PDCCH skipping monitoring period, suspending the PDCCH skipping monitoring in a BWP before switching, and continuing to perform the PDCCH skipping monitoring in a target BWP after switching.

Specifically, the UE operates at the current BWP and performs PDCCH skipping according to the first DCI indication. If the BWP switching indication is obtained in the PDCCH skipping duration, the UE may perform BWP switching according to the BWP switching indication, suspend the PDCCH skipping process in the current BWP, and continue remaining PDCCH skipping after switching to the target BWP.

The BWP switching indication in this embodiment may be transmitted by the network side device and received by the terminal. The BWP switching indication in this embodiment may also be obtained because the BWP inactivity timer expires.

Optionally, duration of the PDCCH skipping monitoring period in the target BWP is obtained according to a quantity of remaining time units and duration of each time unit;
where the quantity of remaining time units is obtained according to at least one of the following: a quantity of total time units occupied by the PDCCH skipping monitoring, a quantity of time units occupied by the PDCCH skipping monitoring in a BWP before switching, and a quantity of time units occupied by a BWP switching delay; and/or
the duration of each time unit is obtained according to one of the following: a subcarrier spacing (SubCarrier Spacing, SCS) of a BWP before switching and an SCS of the target BWP, that is, duration of one time unit, may be any of the following: a time of one unit corresponding to the SCS of the BWP before switching (for example, a time of one slot at 30 KHz is 0.5 ms); and a time of one unit corresponding to the SCS of the target BWP after switching (for example, a time of one slot at 15 KHz is 1 ms).

For example, a quantity of remaining time units may be any of the following: 1) a total quantity of units of PDCCH skipping duration minus a quantity of units of PDCCH skipping monitoring on the BWP before switching; and 2) a total quantity of units of PDCCH skipping duration minus a quantity of units of PDCCH skipping monitoring on the BWP before switching, and minus a quantity of units of a BWP switching delay.

Solution 2.1 and Solution 2.2 define in detail the behavior of PDCCH skipping monitoring of the terminal in a case that BWP switching occurs or a BWP switching indication is received, avoiding the transmission problem caused by the inconsistent understanding between the network side device and the terminal, and improving communication effectiveness.

### Solution 3

The terminal does not expect (or a protocol agreement does not allow) to include the PDCCH skipping indication and also includes any of the following in same DCI: BWP switching indication, secondary cell dormancy (Scell dormancy) indication, and search space group switching indication.

For example, in Embodiment 200, the first DCI is used to indicate PDCCH skipping monitoring, and the first DCI is not used to indicate at least one of the following: BWP switching, secondary cell dormancy, and search space group switching

Embodiment 200 may also include the steps of: The terminal receives second DCI, where the second DCI is used to indicate at least one of the following: BWP switching, secondary cell dormancy, and search space group switching; where the second DCI is not used to indicate PDCCH skipping monitoring.

### Solution 4

In this solution, BWP switching and PDCCH skipping do not take effect at the same time. Solution 4.1 and Solution 4.2 are described below.

### Solution 4.1

The first DCI includes first indication information and second indication information, the first indication information is used to indicate the PDCCH skipping monitoring, and the second indication information is used to indicate at least one of the following: BWP switching, secondary cell dormancy, and search space group switching; where in a case that the first indication information takes effect, the second indication information does not take effect; and/or in a case that the second indication information takes effect, the first indication information does not take effect.

### Solution 4.2

The PDCCH monitoring behavior and the BWP switching behavior in the case of a conflict between the PDCCH skipping monitoring and BWP switching include: performing the BWP switching, and performing the PDCCH skipping monitoring according to the first DCI within a switched target BWP; or performing the PDCCH skipping monitoring according to the first DCI, and performing the BWP switching after the PDCCH skipping monitoring period ends.

The PDCCH skipping monitoring mentioned in this embodiment conflicts with BWP switching, for example, including: The first DCI is used to indicate PDCCH skipping monitoring while indicating the terminal to perform BWP switching. It may be understood that in another embodiment, PDCCH skipping monitoring and BWP switching may be indicated by different signaling or mechanisms, for example, the first DCI indicates PDCCH skipping monitoring and the BWP inactivity timer expires to trigger BWP switching.

Optionally, the first DCI further includes duration information of the PDCCH skipping monitoring period.

The above-mentioned solutions 4.1 and 4.2 avoid a transmission problem caused by inconsistent understanding between the network side device and the terminal when BWP switching and PDCCH skipping take effect simultaneously, thereby improving communication effectiveness.

It should be noted that, the various embodiments of this application may be applied in a power saving (power saving) scenario of the terminal. Specifically, the BWP switching technology can implement switching from a large bandwidth BWP to a small bandwidth BWP, matching a dynamic service change, and realizing terminal power saving. PDCCH skipping means skipping PDCCH monitoring for a time interval by using a dynamic DCI indication, so as to realize terminal power saving. However, in the prior art, the following behavior of the terminal is unclear, for example, a state of the BWP inactivity timer is unclear after the terminal receives the first DCI used to indicate PDCCH skipping monitoring; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching, easily causing inconsistent understanding between the network side device and the terminal side. On this basis, each embodiment of this application provides a corresponding solution, which avoids a transmission problem caused by inconsistent understanding between the network side device and the terminal side, and improves communication effectiveness.

The application scenarios of the various embodiments of this application are not limited to terminal power saving, and can also be applied to a reduced capability terminal device (RedCap UE) or an extended reality (eXtended Reality, XR) scenario.

To describe the PDCCH monitoring method provided in the embodiment of this application in detail, the following description will be made in connection with several specific embodiments.

### Embodiment 1

This embodiment focuses on impact of a PDCCH skipping indication on a BWP-Inactivity Timer.

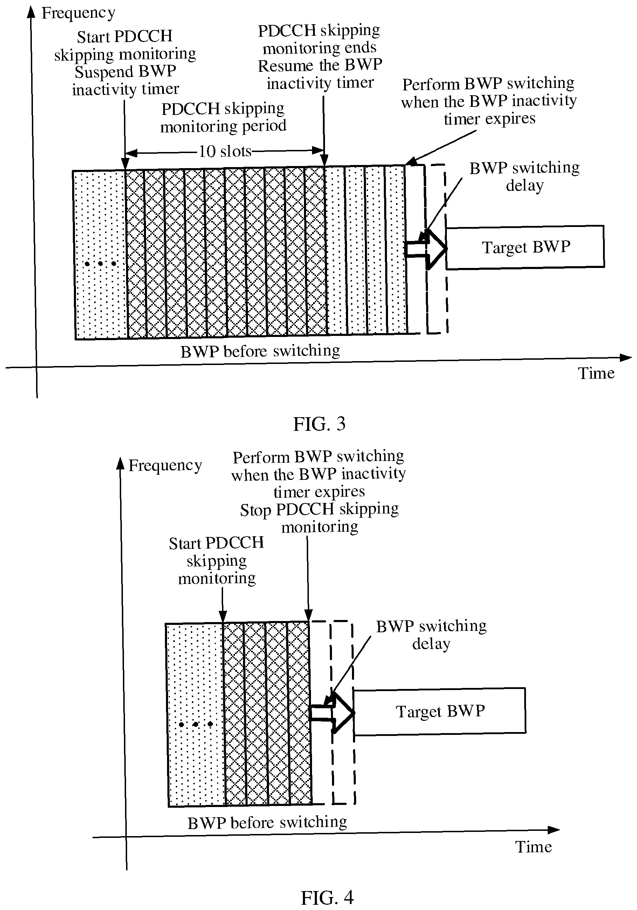

As shown in FIG. 3, UE operates at a current BWP (BWP before switching in FIG. 3), and performs PDCCH skipping monitoring according to a signaling indication. The Bwp-Inactivity Timer is suspended at a start moment of PDCCH skipping duration, and the Bwp-Inactivity Timer is resumed after the PDCCH skipping duration (10 slot) ends. After the Bwp-Inactivity Timer expires, BWP switching is performed to switch to a target BWP.

### Embodiment 2

This embodiment mainly describes impact of BWP switching on PDCCH skipping.

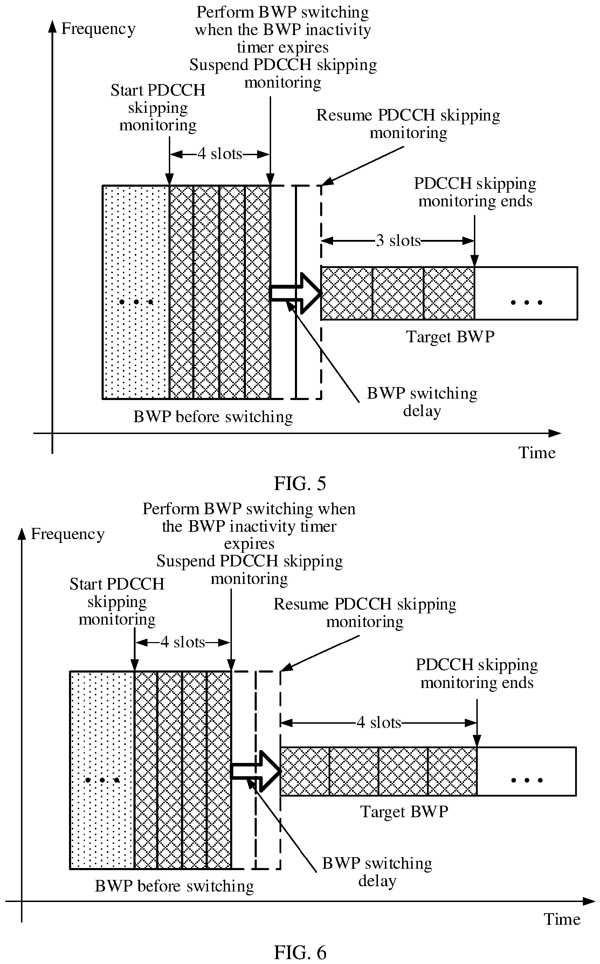

Parameter assumption: UE operates at a current BWP (SCS = 30 KHz, and a time length of 1 slot is 0.5 ms) and needs to switch to a target BWP (SCS = 15 KHz, and a time length of 1 slot corresponds to 1 ms) due to expiration of a Bwp-Inactivity Timer within PDCCH skipping duration. A BWP switching delay is 1 ms, a length of the PDCCH skipping duration is 10 slot, and at the beginning of PDCCH skipping, the Bwp-Inactivity Timer has 4 slots remaining to expire.
(1) As shown in FIG. 4, the UE operates at the current BWP, performs PDCCH skipping according to a signaling indication, performs BWP switching within PDCCH skipping duration, stops the PDCCH skipping process, and does not continue PDCCH skipping on the target BWP, corresponding to solution 2.1.
(2) As shown in FIG. 5, BWP switching occurs in the PDCCH skipping duration, the PDCCH skipping process in the current BWP is suspended, and the remaining PDCCH skipping is continued after switching to the target BWP. A quantity of remaining indication units is a total quantity of units of the PDCCH skipping duration minus a quantity of units of PDCCH skipping monitoring on a BWP before switching. A time of one unit is a time of one unit corresponding to the SCS of the BWP before switching, corresponding to Solution 2.2.

A quantity of remaining units in this example is 10 slots-4 slots=6 slots. The length of one slot corresponding to the SCS=30 KHz of the BWP before switching is 0.5 ms, the remaining time is 6×0.5 ms = 3 ms, corresponding to three slots of the target BWP SCS=15 KHz after switching.

(3) As shown in FIG. 6, BWP switching occurs in the PDCCH skipping duration, the PDCCH skipping process in the current BWP is suspended, and the remaining PDCCH skipping is continued after switching to the target BWP. A quantity of remaining indication units is a total quantity of units of PDCCH skipping duration minus a quantity of units of PDCCH skipping monitoring on the BWP before switching, and minus a quantity of units of a BWP switching delay. A time of one unit is a time of one unit corresponding to the SCS of the target BWP after switching, corresponding to Solution 2.2.

A quantity of remaining units in this example is 10 slots-4 slots-delay switching of 2 slots=4 slots. The length of one slot corresponding to the SCS=15 KHz of the target BWP after switching is 1 ms, the remaining time is 4 × 1 ms = 4 ms, corresponding to four slots of the target BWP SCS=15 KHz after switching.

### Embodiment 3

This embodiment mainly describes that BWP switching and PDCCH skipping do not take effect at the same time.

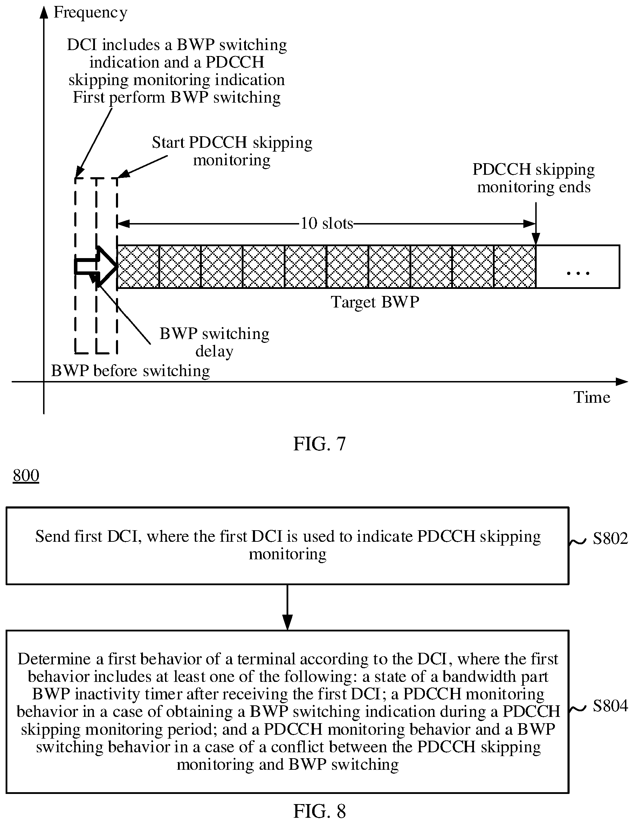

As shown in FIG. 7, same DCI indicates PDCCH skipping and BWP switching. A terminal performs BWP switching first, performs PDCCH skipping on a target BWP after switching, and skips PDCCH monitoring of 10 slots as indicated by the DCI.

The PDCCH monitoring method according to the embodiment of this application is described in detail above in connection with FIG. 2. A PDCCH monitoring method according to another embodiment of this application will be described in detail with reference to FIG. 8. It may be understood that interaction between a network side device and a terminal described from the network side device is the same as that described on the terminal side in the method shown in FIG. 2, and the relevant description is appropriately omitted to avoid repetition.

FIG. 8 is a schematic diagram of an implementation flow of a PDCCH monitoring method according to an embodiment of this application, which may be applied to a network side device. As shown in FIG. 8, the method 800 includes the following steps.

S802: Send first DCI, where the first DCI is used to indicate PDCCH skipping monitoring.

S804: Determine a first behavior of a terminal according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

According to the PDCCH monitoring method provided in this embodiment of this application, the first DCI is sent, and the first behavior of the terminal can be further determined according to the first DCI. The first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching. According to the first behavior of the terminal in the embodiments of this application, the transmission problem easily caused by inconsistent understanding between the terminal and the network side device in a case of a conflict between the PDCCH skipping monitoring and the BWP switching can be solved, and communication effectiveness can be improved.

Optionally, as an embodiment, the state of the BWP inactivity timer after receiving the first DCI includes: suspending or stopping the BWP inactivity timer after receiving the first DCI.

Optionally, as an embodiment, the suspending or stopping the BWP inactivity timer includes: suspending or stopping the BWP inactivity timer at one of the following moments: a moment at which the first DCI is received; a target moment after receiving the first DCI, where the target moment is before a start moment of the PDCCH skipping monitoring period; and the start moment of the PDCCH skipping monitoring period.

Optionally, as an example, in a case of suspending the BWP inactivity timer, the terminal is further configured to perform the PDCCH skipping monitoring according to the first DCI, and resuming the BWP inactivity timer in a case that the PDCCH skipping monitoring period ends.

Optionally, as an embodiment, the PDCCH monitoring behavior in a case of obtaining a BWP switching indication during a PDCCH skipping monitoring period includes: if the BWP switching indication is obtained in the PDCCH skipping monitoring period, stopping the PDCCH skipping monitoring in a BWP before switching, and no longer performing the PDCCH skipping monitoring in a target BWP after switching.

Optionally, as an embodiment, the PDCCH monitoring behavior in a case of obtaining a BWP switching indication during a PDCCH skipping monitoring period includes: if the BWP switching indication is obtained in the PDCCH skipping monitoring period, suspending the PDCCH skipping monitoring in a BWP before switching, and continuing to perform the PDCCH skipping monitoring in a target BWP after switching.

Optionally, as an embodiment, duration of the PDCCH skipping monitoring period in the target BWP is obtained according to a quantity of remaining time units and duration of each time unit; where the quantity of remaining time units is obtained according to at least one of the following: a quantity of total time units occupied by the PDCCH skipping monitoring, a quantity of time units occupied by the PDCCH skipping monitoring in a BWP before switching, and a quantity of time units occupied by a BWP switching delay; and/or the duration of each time unit is obtained according to one of the following: a subcarrier spacing SCS of the BWP before switching, and an SCS of the target BWP.

Optionally, as an embodiment, the first DCI is not used to indicate at least one of the following: BWP switching, secondary cell dormancy, and search space group switching

Optionally, as an embodiment, the method further includes: sending second DCI, where the second DCI is used to indicate at least one of the following: BWP switching, secondary cell dormancy, and search space group switching; where the second DCI is not used to indicate PDCCH skipping monitoring.

Optionally, as an embodiment, the first DCI includes first indication information and second indication information, the first indication information is used to indicate the PDCCH skipping monitoring, and the second indication information is used to indicate at least one of the following: BWP switching, secondary cell dormancy, and search space group switching; where in a case that the first indication information takes effect, the second indication information does not take effect; in a case that the second indication information takes effect, the first indication information does not take effect.

Optionally, as an embodiment, the PDCCH monitoring behavior and the BWP switching behavior in the case of a conflict between the PDCCH skipping monitoring and BWP switching include: performing the BWP switching, and performing the PDCCH skipping monitoring according to the first DCI within a switched target BWP; performing the PDCCH skipping monitoring according to the first DCI, and performing the BWP switching after the PDCCH skipping monitoring period ends.

Optionally, as an embodiment, the first DCI further includes duration information of the PDCCH skipping monitoring period.

It should be noted that, according to the PDCCH monitoring method provided in this embodiment of this application, the execution body may be a PDCCH monitoring apparatus, or a control module for executing the PDCCH monitoring method in the PDCCH monitoring apparatus. A PDCCH monitoring apparatus according to an embodiment of this application is described by using an example in which the PDCCH monitoring apparatus performs a PDCCH monitoring method.

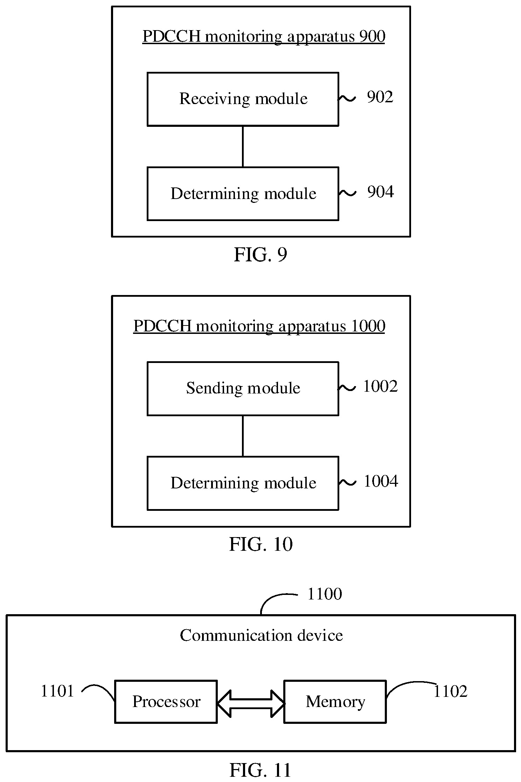

FIG. 9 is a schematic structural diagram of a PDCCH monitoring apparatus according to an embodiment of this application. The apparatus may correspond to a terminal in another embodiment. As shown in FIG. 9, an apparatus 900 includes the following modules.

A receiving module 902 may be configured to receive first DCI, where the first DCI is used to indicate PDCCH skipping monitoring; and
a determining module 904 may be configured to determine a first behavior according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

According to the PDCCH monitoring apparatus provided in this embodiment of this application, in a case that the apparatus receives the first DCI indicating PDCCH skipping monitoring, the first behavior may be determined according to the first DCI, and the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching. According to the first behavior in this embodiment of this application, the transmission problem easily caused by inconsistent understanding between the terminal and the network side device in a case of a conflict between the PDCCH skipping monitoring and the BWP switching can be solved, and communication effectiveness can be improved.

Optionally, as an embodiment, the state of the BWP inactivity timer after receiving the first DCI includes: suspending or stopping the BWP inactivity timer after receiving the first DCI.

Optionally, as an embodiment, the suspending or stopping the BWP inactivity timer includes: suspending or stopping the BWP inactivity timer at one of the following moments: a moment at which the first DCI is received; a target moment after receiving the first DCI, where the target moment is before a start moment of the PDCCH skipping monitoring period; and the start moment of the PDCCH skipping monitoring period.

Optionally, as an embodiment, a control module is further included and is configured to: in a case of suspending the BWP inactivity timer, perform the PDCCH skipping monitoring according to the first DCI, and resuming the BWP inactivity timer in a case that the PDCCH skipping monitoring period ends.

Optionally, as an embodiment, the PDCCH monitoring behavior in a case of obtaining a BWP switching indication during a PDCCH skipping monitoring period includes: if the BWP switching indication is obtained in the PDCCH skipping monitoring period, stopping the PDCCH skipping monitoring in a BWP before switching, and no longer performing the PDCCH skipping monitoring in a target BWP after switching.

Optionally, as an embodiment, the PDCCH monitoring behavior in a case of obtaining a BWP switching indication during a PDCCH skipping monitoring period includes: if the BWP switching indication is obtained in the PDCCH skipping monitoring period, suspending the PDCCH skipping monitoring in a BWP before switching, and continuing to perform the PDCCH skipping monitoring in a target BWP after switching.

Optionally, as an embodiment, duration of the PDCCH skipping monitoring period in the target BWP is obtained according to a quantity of remaining time units and duration of each time unit; where the quantity of remaining time units is obtained according to at least one of the following: a quantity of total time units occupied by the PDCCH skipping monitoring, a quantity of time units occupied by the PDCCH skipping monitoring in a BWP before switching, and a quantity of time units occupied by a BWP switching delay; the duration of each time unit is obtained according to one of the following: a subcarrier spacing SCS of the BWP before switching, and an SCS of the target BWP.

Optionally, as an embodiment, the first DCI is not used to indicate at least one of the following: BWP switching, secondary cell dormancy, and search space group switching

Optionally, as an embodiment, the receiving module 902 may be further configured to receive second DCI, where the second DCI is used to indicate at least one of the following: BWP switching, secondary cell dormancy, and search space group switching; where the second DCI is not used to indicate PDCCH skipping monitoring.

Optionally, as an embodiment, the first DCI includes first indication information and second indication information, the first indication information is used to indicate the PDCCH skipping monitoring, and the second indication information is used to indicate at least one of the following: BWP switching, secondary cell dormancy, and search space group switching; where in a case that the first indication information takes effect, the second indication information does not take effect; in a case that the second indication information takes effect, the first indication information does not take effect.

Optionally, as an embodiment, the PDCCH monitoring behavior and the BWP switching behavior in the case of a conflict between the PDCCH skipping monitoring and BWP switching include: performing the BWP switching, and performing the PDCCH skipping monitoring according to the first DCI within a switched target BWP; performing the PDCCH skipping monitoring according to the first DCI, and performing the BWP switching after the PDCCH skipping monitoring period ends.

Optionally, as an embodiment, the first DCI further includes duration information of the PDCCH skipping monitoring period.

The apparatus 900 according to this embodiment of this application may refer to the flow of the method 200 corresponding to the embodiment of this application, and each unit/module in the apparatus 900 and the other operations and/or functions described above are respectively used to realize the corresponding flow of the method 200, and the same or equivalent technical effects can be achieved. For brevity, details are not described herein.

The PDCCH monitoring apparatus in this embodiment of this application may be an apparatus, or may be a component, an integrated circuit, or a chip in a terminal. The apparatus may be a mobile terminal, or may be a non-mobile terminal. For example, the mobile terminal may include but is not limited to the type of the terminal 11 listed above. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

The PDCCH monitoring apparatus in this embodiment of this application may be an apparatus with an operating system. The operating system may be an Android (Android) operating system, may be an ios operating system, or may be another possible operating system. This is not specifically limited in this embodiment of this application.

The PDCCH monitoring apparatus provided in this embodiment of this application can implement various processes realized in the method embodiments of FIG. 2 to FIG. 8, and achieve the same technical effects. To avoid repetition, details are not described herein.

FIG. 10 is a schematic structural diagram of a PDCCH monitoring apparatus according to an embodiment of this application. The apparatus may correspond to a network side device in another embodiment. As shown in FIG. 10, an apparatus 1000 includes the following modules.

A sending module 1002 may be configured to send first DCI, where the first DCI is used to indicate PDCCH skipping monitoring; and
a determining module 1004 may be configured to determine a first behavior of a terminal according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

According to the PDCCH monitoring apparatus provided in this embodiment of this application, the first DCI is sent, and the first behavior may be determined according to the first DCI. The first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching. According to the first behavior of the terminal in the embodiments of this application, the transmission problem easily caused by inconsistent understanding between the terminal and the network side device in a case of a conflict between the PDCCH skipping monitoring and the BWP switching can be solved, and communication effectiveness can be improved.

Optionally, as an embodiment, the state of the BWP inactivity timer after receiving the first DCI includes: suspending or stopping the BWP inactivity timer after receiving the first DCI.

Optionally, as an embodiment, the suspending or stopping the BWP inactivity timer includes: suspending or stopping the BWP inactivity timer at one of the following moments: a moment at which the first DCI is received; a target moment after receiving the first DCI, where the target moment is before a start moment of the PDCCH skipping monitoring period; and the start moment of the PDCCH skipping monitoring period.

Optionally, as an example, in a case of suspending the BWP inactivity timer, the terminal is further configured to perform the PDCCH skipping monitoring according to the first DCI, and resume the BWP inactivity timer in a case that the PDCCH skipping monitoring period ends.

Optionally, as an embodiment, the PDCCH monitoring behavior in a case of obtaining a BWP switching indication during a PDCCH skipping monitoring period includes: if the BWP switching indication is obtained in the PDCCH skipping monitoring period, stopping the PDCCH skipping monitoring in a BWP before switching, and no longer performing the PDCCH skipping monitoring in a target BWP after switching.

Optionally, as an embodiment, the PDCCH monitoring behavior in a case of obtaining a BWP switching indication during a PDCCH skipping monitoring period includes: if the BWP switching indication is obtained in the PDCCH skipping monitoring period, suspending the PDCCH skipping monitoring in a BWP before switching, and continuing to perform the PDCCH skipping monitoring in a target BWP after switching.

Optionally, as an embodiment, duration of the PDCCH skipping monitoring period in the target BWP is obtained according to a quantity of remaining time units and duration of each time unit; where the quantity of remaining time units is obtained according to at least one of the following: a quantity of total time units occupied by the PDCCH skipping monitoring, a quantity of time units occupied by the PDCCH skipping monitoring in a BWP before switching, and a quantity of time units occupied by a BWP switching delay; the duration of each time unit is obtained according to one of the following: a subcarrier spacing SCS of the BWP before switching, and an SCS of the target BWP.

Optionally, as an embodiment, the first DCI is not used to indicate at least one of the following: BWP switching, secondary cell dormancy, and search space group switching

Optionally, as an embodiment, the sending module 1002 may be configured to send second DCI, where the second DCI is used to indicate at least one of the following: BWP switching, secondary cell dormancy, and search space group switching; where the second DCI is not used to indicate PDCCH skipping monitoring.

Optionally, as an embodiment, the first DCI includes first indication information and second indication information, the first indication information is used to indicate the PDCCH skipping monitoring, and the second indication information is used to indicate at least one of the following: BWP switching, secondary cell dormancy, and search space group switching; where in a case that the first indication information takes effect, the second indication information does not take effect; in a case that the second indication information takes effect, the first indication information does not take effect.

Optionally, as an embodiment, the PDCCH monitoring behavior and the BWP switching behavior in the case of a conflict between the PDCCH skipping monitoring and BWP switching include: performing the BWP switching, and performing the PDCCH skipping monitoring according to the first DCI within a switched target BWP; performing the PDCCH skipping monitoring according to the first DCI, and performing the BWP switching after the PDCCH skipping monitoring period ends.

Optionally, as an embodiment, the first DCI further includes duration information of the PDCCH skipping monitoring period.

The apparatus 1000 according to this embodiment of this application may refer to the flow of the method 800 corresponding to the embodiment of this application, and each unit/module in the apparatus 1000 and the other operations and/or functions described above are respectively used to realize the corresponding flow of the method 800, and the same or equivalent technical effects can be achieved. For brevity, details are not described herein.

Optionally, as shown in FIG. 11, an embodiment of this application further provides a communication device 1100, including a processor 1101, a memory 1102, and a program or instructions stored in the memory 1102 and executable on the processor 1101. For example, when the communication device 1100 is a terminal, each process of the foregoing PDCCH monitoring method embodiment is implemented when the program or the instructions are executed by the processor 1101, and a same technical effect can be achieved. When the communication device 1100 is a network side device, each process of the foregoing PDCCH monitoring method embodiment is implemented when the program or the instructions are executed by the processor 1101, and a same technical effect can be achieved. To avoid repetition, details are not described herein again.

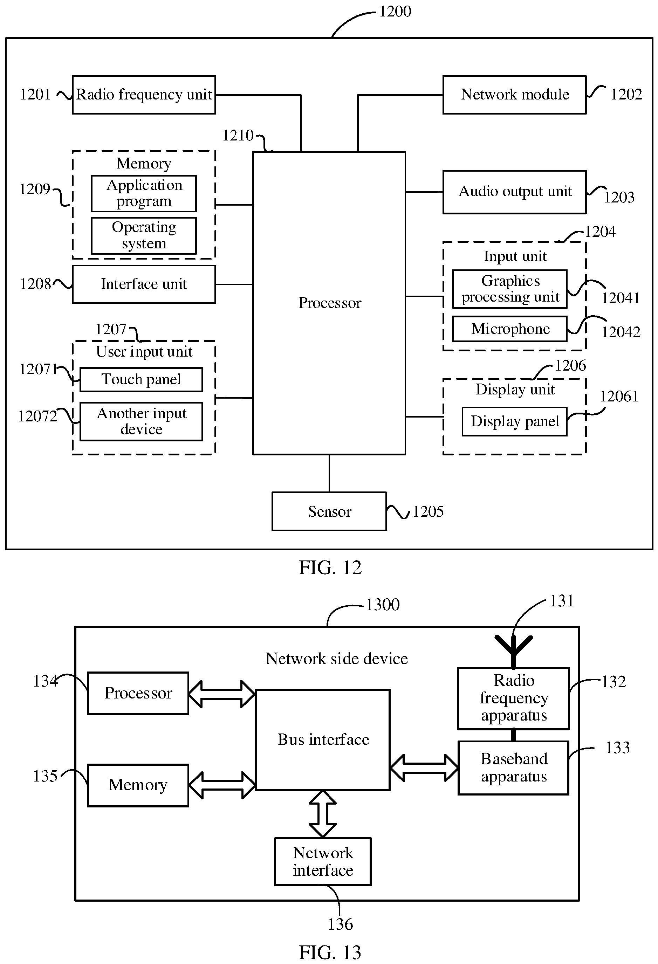

FIG. 12 is a schematic diagram of a hardware structure of a terminal according to an embodiment of this application.

The terminal 1200 includes, but is not limited to: a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the terminal 1200 may further include a power supply (for example, a battery) that supplies power to each component. The power supply may be logically connected to the processor 1210 by using a power management system, so as to manage functions such as charging, discharging, and power consumption by using the power management system. The terminal structure shown in FIG. 12 constitutes no limitation on the terminal, and the terminal may include more or fewer components than those shown in the figure, or combine some components, or have different component arrangements.

It should be understood that, in this embodiment of this application, the input unit 1204 may include a graphics processing unit (Graphics Processing Unit, GPU) 12041 and a microphone 12042. The graphics processing unit 12041 processes image data of a still picture or a video obtained by an image capture apparatus (such as a camera) in a video capture mode or an image capture mode. The display unit 1206 may include a display panel 12061. The display panel 12061 may be configured in a form such as a liquid crystal display or an organic light-emitting diode. The user input unit 1207 may include a touch panel 12071 and another input device 12072. The touch panel 12071 is also referred to as a touchscreen. The touch panel 12071 may include two parts: a touch detection apparatus and a touch controller. The another input device 12072 may include but is not limited to a physical keyboard, a function key (such as a volume control key or an on/off key), a trackball, a mouse, and a joystick. Details are not described herein.

In this embodiment of this application, the radio frequency unit 1201 receives downlink data from the network side device and sends the downlink data to the processor 1210 for processing. In addition, uplink data is sent to the network side device. Generally, the radio frequency unit 1201 includes but is not limited to: an antenna, at least one amplifier, a transceiver, a coupler, a low noise amplifier, and a duplexer.

The memory 1209 may be configured to store a software program, instructions, and various data. The memory 1209 may mainly include a program or instruction storage area and a data storage area, where the program or instruction storage area may store an operating system, an application program or an instruction (such as a sound play function or an image play function) required by at least one function, and the like. In addition, the memory 1209 may include a high-speed random access memory, and may further include a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory, for example, at least one magnetic disk storage device, a flash memory device, or another non-volatile solid-state storage device.

The processor 1210 may include one or more processing units. Optionally, the processor 1210 may integrate an application processor and a modem processor, where the application processor mainly processes an operating system, a user interface, an application program, instructions, or the like, and the modem processor mainly processes wireless communication, such as a baseband processor. It may be understood that the modem processor may not be integrated into the processor 1210.

The radio frequency unit 1201 is configured to receive first downlink control information DCI, where the first DCI is used to indicate physical downlink control channel PDCCH skipping monitoring; and the processor 1210 is configured to determine a first behavior according to the first DCI, where the first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching.

The terminal provided in this embodiment of this application may determine the first behavior according to the first DCI in a case of receiving the first DCI used to indicate PDCCH skipping monitoring. The first behavior includes at least one of the following: a state of a bandwidth part BWP inactivity timer after receiving the first DCI; a PDCCH monitoring behavior in a case of obtaining a BWP switching indication during a PDCCH skipping monitoring period; and a PDCCH monitoring behavior and a BWP switching behavior in a case of a conflict between the PDCCH skipping monitoring and BWP switching. According to the first behavior in this embodiment of this application, the transmission problem easily caused by inconsistent understanding between the terminal and the network side device in a case of a conflict between the PDCCH skipping monitoring and the BWP switching can be solved, and communication effectiveness can be improved.

The terminal 1200 provided in this embodiment of this application may further implement various processes of the PDCCH monitoring method embodiments described above, and achieve the same technical effects. To avoid repetition, details are not described herein.

Specifically, an embodiment of this application further provides a network side device. As shown in FIG. 13, a network side device 1300 includes: an antenna 131, a radio frequency device 132, and a baseband device 133. The antenna 131 is connected to the radio frequency apparatus 132. In an uplink direction, the radio frequency apparatus 132 receives information by using the antenna 131, and sends the received information to the baseband apparatus 133 for processing. In a downlink direction, the baseband apparatus 133 processes information that needs to be sent, and sends processed information to the radio frequency apparatus 132. The radio frequency apparatus 132 processes the received information, and sends processed information by using the antenna 131.

The frequency band processing apparatus may be located in the baseband apparatus 133, and the method performed by the network side device in the foregoing embodiment may be implemented in the baseband apparatus 133. The baseband apparatus 133 includes a processor 134 and a memory 135.

The baseband apparatus 133 may include, for example, at least one baseband board, where a plurality of chips are disposed on the baseband board. As shown in FIG. 13, one chip is, for example, the processor 134, which is connected to the memory 135, so as to schedule a program in the memory 135 to perform an operation of the network side device shown in the foregoing method embodiment.

The baseband apparatus 133 may further include a network interface 136, configured to exchange information with the radio frequency apparatus 132. For example, the interface is a common public radio interface (common public radio interface, CPRI for short).

Specifically, the network side device of this embodiment of the present invention further includes: instructions or a program stored in the memory 135 and executable on the processor 134. The processor 134 invokes the instructions or the program in the memory 135 to perform the method performed by the modules shown in FIG. 10, and achieves a same technical effect. To avoid repetition, details are not described herein again.

An embodiment of this application further provides a readable storage medium, which may be volatile or non-volatile. A program or instructions are stored in the readable storage medium. When the program or instructions are executed by a processor, each process of the PDCCH monitoring method embodiment is implemented, and a same technical effect can be achieved. To avoid repetition, details are not described herein.

The processor may be a processor in the terminal in the foregoing embodiment. The readable storage medium includes a computer-readable storage medium such as a read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to execute a program or instructions to implement various processes in the foregoing PDCCH monitoring method embodiments, and a same technical effect can be achieved. To avoid repetition, details are not described herein again.

It should be understood that the chip mentioned in this embodiment of this application may also be referred to as a system-level chip, a system chip, a chip system, or a system on chip.

Another embodiment of this application provides a computer program product, which is stored in a non-transient storage medium. The computer program product is executed by at least one processor to implement each process of the PDCCH monitoring method embodiment, and can achieve the same technical effect. To avoid repetition, details are not described herein.

Another embodiment of this application provides a communication device configured to perform various processes of the PDCCH monitoring method embodiment described above, and achieve the same technical effect. To avoid repetition, details are not described herein.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, objects, or apparatuses that include the elements. In addition, it should be noted that the scope of the method and apparatus in the embodiments of this application is not limited to performing a function in a sequence shown or discussed, and may further include performing a function in a basically simultaneous manner or in a reverse sequence based on a related function. For example, the described method may be performed in an order from the described order, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware only. In most circumstances, the former is a better implementation. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network side device, or the like) to perform the methods described in the embodiments of this application.

The foregoing describes the embodiments of this application with reference to the accompanying drawings. However, this application is not limited to the foregoing specific implementations. The foregoing specific implementations are merely examples, and are not restrictive. Under the enlightenment of this application, many forms may be further made by a person of ordinary skill in the art without departing from the objective of this application and the protection scope of the claims and shall fall within the protection scope of this application.

## Claims

1. A PDCCH monitoring method, applied to a terminal, the method comprising:
receiving first downlink control information DCI, wherein the first DCI is used to indicate physical downlink control channel PDCCH skipping monitoring; and
determining a first behavior according to the first DCI, wherein the first behavior comprises at least one of the following:
a state of a bandwidth part BWP inactivity timer after receiving the first DCI;
a PDCCH monitoring behavior in a case of obtaining a BWP switching indication during a PDCCH skipping monitoring period; and
a PDCCH monitoring behavior and a BWP switching behavior in a case of a conflict between the PDCCH skipping monitoring and BWP switching.

2. The method according to claim 1, wherein the state of the BWP inactivity timer after receiving the first DCI comprises:
suspending or stopping the BWP inactivity timer after receiving the first DCI.

3. The method according to claim 2, wherein the suspending or stopping the BWP inactivity timer comprises: suspending or stopping the BWP inactivity timer at one of the following moments:
a moment at which the first DCI is received;
a target moment after receiving the first DCI, wherein the target moment is before a start moment of the PDCCH skipping monitoring period; and
the start moment of the PDCCH skipping monitoring period.

4. The method according to claim 2, wherein in a case of suspending the BWP inactivity timer, the method further comprises:
performing the PDCCH skipping monitoring according to the first DCI, and resuming the BWP inactivity timer in a case that the PDCCH skipping monitoring period ends.

5. The method according to claim 1, wherein the PDCCH monitoring behavior in the case of obtaining the BWP switching indication during the PDCCH skipping monitoring period comprises:
if the BWP switching indication is obtained in the PDCCH skipping monitoring period, stopping the PDCCH skipping monitoring in a BWP before switching, and no longer performing the PDCCH skipping monitoring in a target BWP after switching.

6. The method according to claim 1, wherein the PDCCH monitoring behavior in the case of obtaining the BWP switching indication during the PDCCH skipping monitoring period comprises:
if the BWP switching indication is obtained in the PDCCH skipping monitoring period, suspending the PDCCH skipping monitoring in a BWP before switching, and continuing to perform the PDCCH skipping monitoring in a target BWP after switching.

7. The method according to claim 6, wherein duration of the PDCCH skipping monitoring period in the target BWP is obtained according to a quantity of remaining time units and duration of each time unit;
wherein the quantity of remaining time units is obtained according to at least one of the following: a quantity of total time units occupied by the PDCCH skipping monitoring, a quantity of time units occupied by the PDCCH skipping monitoring in the BWP before switching, and a quantity of time units occupied by a BWP switching delay; and/or
the duration of each time unit is obtained according to one of the following: a subcarrier spacing SCS of the BWP before switching, and an SCS of the target BWP.

8. The method according to claim 1, wherein the first DCI is not used to indicate at least one of the following: BWP switching, secondary cell dormancy, and search space group switching.

9. The method according to claim 1, wherein the method further comprises: receiving second DCI, wherein the second DCI is used to indicate at least one of the following:
BWP switching, secondary cell dormancy, and search space group switching; wherein the second DCI is not used to indicate PDCCH skipping monitoring.

10. The method according to claim 1, wherein the first DCI comprises first indication information and second indication information, the first indication information is used to indicate the PDCCH skipping monitoring, and the second indication information is used to indicate at least one of the following: BWP switching, secondary cell dormancy, and search space group switching;
wherein in a case that the first indication information takes effect, the second indication information does not take effect; and/or
in a case that the second indication information takes effect, the first indication information does not take effect.

11. The method according to claim 1, wherein the PDCCH monitoring behavior and the BWP switching behavior in the case of a conflict between the PDCCH skipping monitoring and BWP switching comprise:
performing the BWP switching, and performing the PDCCH skipping monitoring according to the first DCI within a switched target BWP; or
performing the PDCCH skipping monitoring according to the first DCI, and performing the BWP switching after the PDCCH skipping monitoring period ends.

12. The method according to claim 11, wherein the first DCI further comprises duration information of the PDCCH skipping monitoring period.

13. A PDCCH monitoring method, applied to a network side device, wherein the method comprises:
sending first DCI, wherein the first DCI is used to indicate PDCCH skipping monitoring.

14. A PDCCH monitoring apparatus, comprising:
a receiving module, configured to receive first DCI, wherein the first DCI is used to indicate PDCCH skipping monitoring; and
a determining module, configured to determine a first behavior according to the first DCI, wherein the first behavior comprises at least one of the following:
a state of a bandwidth part BWP inactivity timer after receiving the first DCI;
a PDCCH monitoring behavior in a case of obtaining a BWP switching indication during a PDCCH skipping monitoring period; and
a PDCCH monitoring behavior and a BWP switching behavior in a case of a conflict between the PDCCH skipping monitoring and BWP switching.

15. The apparatus according to claim 14, wherein the state of the BWP inactivity timer after receiving the first DCI comprises:
suspending or stopping the BWP inactivity timer after receiving the first DCI.

16. The apparatus according to claim 15, further comprising:
a control module, configured to perform the PDCCH skipping monitoring according to the first DCI, and resume the BWP inactivity timer in a case that the PDCCH skipping monitoring period ends.

17. The apparatus according to claim 14, wherein the PDCCH monitoring behavior in the case of obtaining the BWP switching indication during the PDCCH skipping monitoring period comprises:
if the BWP switching indication is obtained in the PDCCH skipping monitoring period, stopping the PDCCH skipping monitoring in a BWP before switching, and no longer performing the PDCCH skipping monitoring in a target BWP after switching.

18. The apparatus according to claim 14, wherein the PDCCH monitoring behavior in the case of obtaining the BWP switching indication during the PDCCH skipping monitoring period comprises:
if the BWP switching indication is obtained in the PDCCH skipping monitoring period, suspending the PDCCH skipping monitoring in a BWP before switching, and continuing to perform the PDCCH skipping monitoring in a target BWP after switching.

19. The apparatus according to claim 14, wherein the PDCCH monitoring behavior and the BWP switching behavior in the case of a conflict between the PDCCH skipping monitoring and BWP switching comprise:
performing the BWP switching, and performing the PDCCH skipping monitoring according to the first DCI within a switched target BWP; or
performing the PDCCH skipping monitoring according to the first DCI, and performing the BWP switching after the PDCCH skipping monitoring period ends.

20. A PDCCH monitoring apparatus, comprising:
a sending module, configured to send first DCI, wherein the first DCI is used to indicate PDCCH skipping monitoring.

21. A terminal, comprising a processor, a memory, and a program or instructions stored in the memory and executable on the processor, wherein when the program or instructions are executed by the processor, the PDCCH monitoring method according to any one of claims 1 to 12 is implemented.

22. A network side device, comprising a processor, a memory, and a program or instructions stored in the memory and executable on the processor, wherein when the program or instructions are executed by the processor, the PDCCH monitoring method according to claim 13 is implemented.

23. A readable storage medium, storing a program or instructions, wherein when the program or instructions are executed by a processor, the PDCCH monitoring method according to any one of claims 1 to 12 is implemented or the PDCCH monitoring method according to claim 13 is implemented.

24. A chip, comprising a processor and a communication interface, wherein the communication interface is coupled to the processor, the processor is configured to execute a program or instructions, to implement the PDCCH monitoring method according to any one of claims 1 to 12, or to implement the PDCCH monitoring method according to claim 13.

25. A computer program product, stored in a non-transient storage medium, wherein the computer program product is executed by at least one processor to implement the PDCCH monitoring method according to any one of claims 1 to 12 or to implement the PDCCH monitoring method according to claim 13.
